# EUROPEAN PATENT APPLICATION

(11) **EP 4 692 873 A1**
(43) Date of publication of application: **11.02.2026**
(21) Application number: 24855399.2
(22) Date of filing: 03.06.2024
(51) Int. Cl.: G02B 6/02, G02B 6/036

(54) **FINE-DIAMETER LOW-LOSS OPTICAL FIBER AND OPTICAL CABLE**

(30) Priority: 21.08.2023 CN 202311060443
(71) Applicant: Zhongtian Technology Fibre Optics Co., Ltd., Nantong, Jiangsu 226000 (CN); Jiangsu Zhongtian Technology Co., Ltd., Nantong, Jiangsu 226000 (CN); Jiangdong Technology Co., Ltd., Nantong, Jiangsu 226400 (CN); Zhongtian Technology Advanced Materials Co., Ltd., Nantong, Jiangsu 226000 (CN)
(72) Inventor: YOU, Guanglei, Nantong, Jiangsu 226000 (CN); LIU, Zhizhong, Nantong, Jiangsu 226000 (CN); ZHANG, Tingting, Nantong, Jiangsu 226000 (CN); CAO, Shanshan, Nantong, Jiangsu 226000 (CN); WANG, Zhen, Nantong, Jiangsu 226000 (CN); XU, Haitao, Nantong, Jiangsu 226000 (CN)
(74) Representative: J A Kemp LLP
(86) International application number: PCT/CN2024/097116
(87) International publication number: WO 2025/039669

(57) **Abstract**

The present application provides a reduced-diameter low-loss optical fiber and an optical cable. The reduced-diameter low-loss optical fiber includes a quartz layer, an adhesive layer, a first coating layer, and a second coating layer which are sequentially provided from inside to outside along a radial direction of the reduced-diameter low-loss optical fiber; where the adhesive layer is configured to increase an adhesive force between the first coating layer and the quartz layer; the first coating layer is configured to protect the quartz layer; and the second coating layer includes a second coating layer matrix and a plurality of reinforcing members, a base material of the second coating layer matrix is the same as that of the first coating layer, and the plurality of reinforcing members are distributed in the second coating layer matrix, so as to increase a strength of the reduced-diameter low-loss optical fiber. In the reduced-diameter low-loss optical fiber provided by the present application, the strength of the reduced-diameter low-loss optical fiber is relatively large, and the adhesive force between the coating layer and the quartz layer in the reduced-diameter low-loss optical fiber is relatively strong.

## Description

The present application claims priority to the Chinese Patent Application No. 202311060443.5, filed with the China National Intellectual Property Administration on August 21, 2023 and entitled "REDUCED-DIAMETER LOW-LOSS OPTICAL FIBER AND OPTICAL CABLE", which is hereby incorporated by reference in its entirety.

### TECHNICAL FIELD

The present application relates to the field of optical cable technologies, and in particular, to a reduced-diameter low-loss optical fiber and an optical cable.

### BACKGROUND

With the development of communication technologies, the demand for transmission capacity of optical cables has further increased.

The optical cables include a plurality of optical fibers, which serve as a basic unit of optical communication, and the plurality of optical fibers are cabled and laid in conduits. A diameter of a conventional optical fiber is relatively large, and the quantity of optical fibers contained in the optical cable is small, so that the transmission capacity of the optical cable is relatively small. Each optical fiber includes a quartz layer and a coating layer, where the diameter of the optical fiber can be reduced by reducing a thickness of the coating layer, and the optical fiber with a smaller diameter is referred to as a reduced-diameter low-loss optical fiber. It can increase the quantity of optical fibers in the optical cable by using the reduced-diameter low-loss optical fibers in the optical cable, thereby increasing the transmission capacity of the optical cable.

In the related art, the thickness of the coating layer in the reduced-diameter low-loss optical fiber is reduced, resulting in a decrease in the strength of the reduced-diameter low-loss optical fiber and a decrease in the adhesive force between the coating layer and the quartz layer.

### SUMMARY

The present application provides a reduced-diameter low-loss optical fiber and an optical cable, and the reduced-diameter low-loss optical fiber has a relatively large strength and there is a relatively strong adhesive force between the coating layer and the quartz layer in the reduced-diameter low-loss optical fiber.

The present application provides a reduced-diameter low-loss optical fiber, including a quartz layer, an adhesive layer, a first coating layer, and a second coating layer which are sequentially provided from inside to outside along a radial direction of the reduced-diameter low-loss optical fiber; where
the adhesive layer is configured to increase an adhesive force between the first coating layer and the quartz layer; the first coating layer is configured to protect the quartz layer; and the second coating layer includes a second coating layer matrix and a plurality of reinforcing members, where the base material of the second coating layer matrix is the same as that of the first coating layer, and the plurality of reinforcing members are distributed in the second coating layer matrix, so as to increase a strength of the reduced-diameter low-loss optical fiber.

In a possible implementation, in the reduced-diameter low-loss optical fiber provided by the present application, the adhesive layer includes an adhesive layer matrix and an adhesive agent, where the adhesive agent is uniformly distributed in the adhesive layer matrix and the adhesive agent is a silane coupling agent which includes a first functional group and a second functional group, where the first functional group is connected to the second functional group through a chemical bond, the first functional group is one of trimethoxy or triethoxy; and the second functional group is one of γ-methacryloxypropyl, γ-aminopropyl, 3-mercaptopropyl, or γ-mercaptopropyl; and
the first functional group is bonded to the quartz layer through the chemical bond, and the second functional group is bonded to the first coating layer through the chemical bond.

In a possible implementation, in the reduced-diameter low-loss optical fiber provided by the present application, a mass percentage of the adhesive agent in the adhesive layer is 2%-5%.

In a possible implementation, in the reduced-diameter low-loss optical fiber provided by the present application, the adhesive force between the first coating layer and the quartz layer is in a range of 10g-20g.

In a possible implementation, in the reduced-diameter low-loss optical fiber provided by the present application, the reinforcing members extend along an axial direction of the reduced-diameter low-loss optical fiber, and the reinforcing members are nanotubes.

In a possible implementation, in the reduced-diameter low-loss optical fiber provided by the present application, the second coating layer further includes a dispersing agent, and the dispersing agent is configured to uniformly distribute the nanotubes in the second coating layer matrix.

In a possible implementation, in the reduced-diameter low-loss optical fiber provided by the present application, a mass percentage of the nanotubes in the second coating layer is 0.25%-5%.

In a possible implementation, in the reduced-diameter low-loss optical fiber provided by the present application, an elastic modulus of the second coating layer along the axial direction of the reduced-diameter low-loss optical fiber is greater than 800Mpa and less than or equal to 2000Mpa.

In a possible implementation, in the reduced-diameter low-loss optical fiber provided by the present application, a thickness of the adhesive layer is 5-10µm; a thickness of the first coating layer is 12.5-32.0µm; and a thickness of the second coating layer is 15-30µm.

The embodiments of the present application further provide an optical cable, including a protective layer and the above-mentioned reduced-diameter low-loss optical fiber, where a plurality of reduced-diameter low-loss optical fibers are arranged inside the protective layer.

The present application provides a reduced-diameter low-loss optical fiber and an optical cable. The reduced-diameter low-loss optical fiber is provided with a quartz layer, an adhesive layer, a first coating layer and a second coating layer which are sequentially provided from inside to outside along a radial direction of the reduced-diameter low-loss optical fiber; where the adhesive layer is provided between the quartz layer and the first coating layer so as to increase an adhesive force between the first coating layer and the quartz layer; the first coating layer is configured to protect the quartz layer; and the second coating layer includes a second coating layer matrix and a plurality of reinforcing members, where the base material of the second coating layer matrix is the same as that of the first coating layer. By setting the base material of the second coating layer matrix and the base material of the first coating layer to be the same, the adhesive force between the second coating layer and the first coating layer may be ensured. The plurality of reinforcing members are distributed in the second coating layer matrix, and the reinforcing members can prevent the propagation of micro-cracks in the second coating layer matrix and reduce the elongation at break of the second coating layer matrix, so as to increase the tensile strength and the compressive strength of the second coating layer, thereby further increasing the tensile strength and the compressive strength of the reduced-diameter low-loss optical fiber.

### BRIEF DESCRIPTION OF THE DRAWINGS

In order to illustrate the technical solutions in the embodiments of the present application or in the prior art more clearly, a brief description will be given to the accompanying drawings required for the description of the embodiments or the prior art. Obviously, the accompanying drawings in the following description are merely some embodiments of the present application, and for those ordinary skilled in the art, other accompanying drawings can also be obtained from these accompanying drawings without creative efforts.
FIG. 1 is a schematic diagram of an inner structure of a reduced-diameter low-loss optical fiber along a radial direction according to an embodiment of the present application.
FIG. 2 is a schematic diagram of an inner structure of a reduced-diameter low-loss optical fiber along an axial direction according to an embodiment of the present application.
FIG. 3 is a schematic diagram of adhesive effect of an adhesive layer in a reduced-diameter low-loss optical fiber according to an embodiment of the present application.
FIG. 4 is a schematic diagram illustrating a peeling force testing process of a reduced-diameter low-loss optical fiber according to an embodiment of the present application.
FIG. 5 is an enlarged view of region A in FIG. 4.
FIG. 6 is a fracture stress distribution diagram of a reduced-diameter low-loss optical fiber under three strain rates according to an embodiment of the present application.
FIG. 7 is a schematic structural diagram of an optical cable according to an embodiment of the present application.

Description of reference numerals:
10-winding wheel;
20-peeling tool;
100-reduced-diameter low-loss optical fiber;
110-quartz layer;
111-fiber core;
112-cladding layer;
120-adhesive layer;
121-adhesive layer matrix;
122-adhesive agent; 1211-first functional group; 1212-second functional group;
130-first coating layer;
140-second coating layer;
141-second coating layer matrix;
142-reinforcing member;
200-protective layer;
1000-optical cable;
H1-first length;
H2-second length;
L- Axial direction of the reduced-diameter low-loss optical fiber;
R- Radial direction of the reduced-diameter low-loss optical fiber.

### DESCRIPTION OF EMBODIMENTS

In order to make the objectives, technical solutions, and advantages of the embodiments of the present application clearer, the technical solutions in the embodiments of the present application will be clearly and completely described in the below with reference to the accompanying drawings in the embodiments of the present application. Obviously, the described embodiments are merely some rather than all of the embodiments of the present application. Based on the embodiments of the present application, all other embodiments obtained by those ordinary skilled in the art without creative efforts shall fall within the protection scope of the present application.

In the description of the present application, it should be noted that unless otherwise specified or defined, the terms "mount", "connect", and "link" should be understood in a broader sense, for example, it may be fixed connection, indirect connection through an intermediate medium, or inner communication of two elements or interaction relationships of the two elements. For those ordinary skilled in the art, the specific meanings of the above terms in the present application can be understood based on specific circumstances.

In the description of the present application, it should be understood that the orientation or position relationships indicated by the terms "up", "down", "front", "back", "vertical", "horizontal", "top", "bottom", "inside", "outside", etc., are based on the directional or positional relationships shown in the accompanying drawings, which are only for the convenience of describing the present application and simplifying the description, rather than indicating or implying that the devices or elements referred to must have a particular orientation, or be constructed and operated in a particular orientation. Therefore, it cannot be understood that the present disclosure is limited thereto.

The terms "first", "second", and "third" (if any) in the specification, claims, and accompanying drawings of the present application are used to distinguish similar objects, and are not necessarily used to describe a specific sequence or order. It should be understood that the data used in this way may be interchanged in appropriate circumstances, so that the embodiments of the present application described herein, for example, can be implemented in sequences other than those illustrated or described herein.

In addition, the terms "include" and "have", and any variations thereof, are intended to cover a non-exclusive inclusion, for example, a process, a method, a system, product, or a maintenance tool that includes a series of steps or units is not necessarily limited to those steps or units expressly listed, but may include other steps or units that are not expressly listed or inherent to such process, method, product, or maintenance tool.

With the development of communication technologies, the demand for the transmission capacity of optical cables has further increased.

The optical cable includes a plurality of optical fibers, which serve as a basic unit of optical communication, and the plurality of optical fibers are cabled and laid in conduits. A diameter of a conventional optical fiber is relatively large, and the quantity of optical fibers contained in the optical cable is small, so that the transmission capacity of the optical cable is relatively small. In order to increase the transmission capacity of the optical cable, it is necessary to increase the quantity of optical fibers in the optical cable, but the increase in the quantity of optical fibers in the optical cable leads to an increase in the diameter of the optical cable. However, a diameter of the conduits for laying the optical cable is a fixed value, and if the diameter of the optical cable is increased, the conduits needs to be laid again, which incurs higher costs for laying conduits.

The optical fiber includes a quartz layer and a coating layer, where the coating layer is configured to protect the quartz layer. The diameter of the optical fiber can be reduced by reducing a thickness of the coating layer, and the optical fiber with a smaller diameter is referred to as a reduced-diameter low-loss optical fiber. It can increase the quantity of optical fibers in the optical cable by using the reduced-diameter low-loss optical fibers in the optical cable, thereby increasing the transmission capacity of the optical cable.

In the related art, the thickness of the coating layer of the reduced-diameter low-loss optical fiber is reduced, resulting in a decrease in the strength of the reduced-diameter low-loss optical fiber and a decrease in the adhesive force between the coating layer and the quartz layer. The low strength makes it easy for the reduced-diameter low-loss optical fiber to be deformed or be damaged by an external stress, and the reduced adhesive force between the coating layer and the quartz layer leads to the coating layer falling off from the quartz layer, thereby making it difficult to protect the quartz layer.

Based on this, the present application provides a reduced-diameter low-loss optical fiber and an optical cable, the reduced-diameter low-loss optical fiber has a relatively large strength and there is a relatively strong adhesive force between the coating layer and the quartz layer in the reduced-diameter low-loss optical fiber.

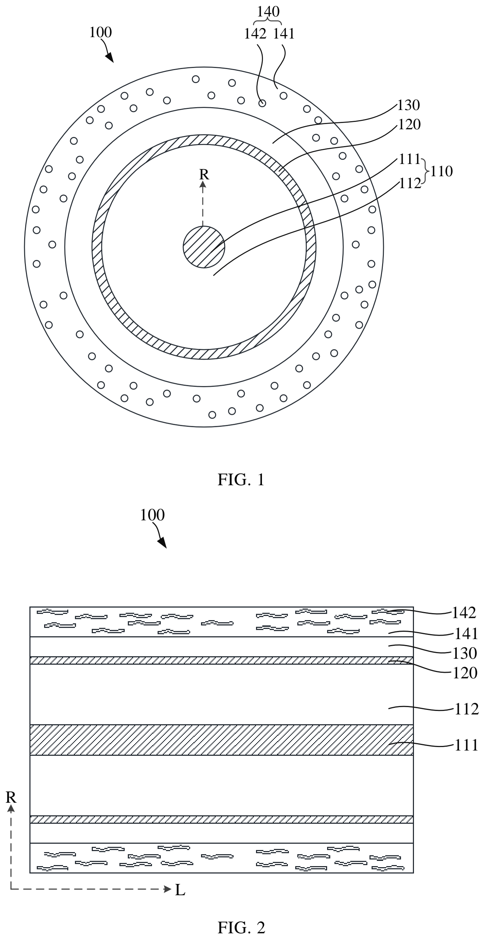

FIG. 1 is a schematic diagram of an inner structure of the reduced-diameter low-loss optical fiber in a radial direction according to an embodiment of the present application; and FIG. 2 is a schematic diagram of an inner structure of the reduced-diameter low-loss optical fiber in an axial direction according to an embodiment of the present application.

Referring to FIGS. 1 and 2, the reduced-diameter low-loss optical fiber 100 provided in the present application includes a quartz layer 110, an adhesive layer 120, a first coating layer 130 and a second coating layer 140 which are sequentially provided from inside to outside along a radial direction R of the reduced-diameter low-loss optical fiber; where the adhesive layer 120 is configured to increase an adhesive force between the first coating layer 130 and the quartz layer 110; the first coating layer 130 is configured to protect the quartz layer 110; and the second coating layer 140 includes a second coating layer matrix 141 and a plurality of reinforcing members 142, where the base material of the second coating layer matrix 141 is the same base material as that of the first coating layer 130, and the plurality of reinforcing members 142 are distributed in the second coating layer matrix 141, so as to increase a strength of the reduced-diameter low-loss optical fiber 100.

Specifically, with continued reference to FIG. 1, the quartz layer 110 includes a fiber core 111 and a cladding layer 112. The base materials of the fiber core 111 and the cladding layer 112 are both quartz glass (silicon dioxide, SiO2). The base materials of the fiber core 111 and the cladding layer 112 have different doping, resulting in different refractive indices of light for the fiber core 111 and the cladding layer 112. The light is transmitted in the fiber core 111, the cladding layer 112 provides a reflective surface for the transmission of the light, and the cladding layer 112 may also provide a function of mechanical protection.

The base material of the first coating layer 130 may be an acrylic polymer resin. An elastic modulus of the first coating layer 130 is relatively small, and the elastic modulus of the first coating layer 130 is generally set in a range of 0.3Mpa-0.6Mpa, so that the flexibility of the first coating layer 130 is better and the stress on the quartz layer 110 can be buffered, thereby protecting the quartz layer 110.

In this embodiment, by providing the adhesive layer 120 between the quartz layer 110 and the first coating layer 130, the adhesive force between the first coating layer 130 and the quartz layer 110 may be increased.

Specifically, one side of the adhesive layer 120 is adhered to the cladding layer 112, and the other side of the adhesive layer 120 is adhered to the first coating layer 130. The adhesive layer 120 can increase the adhesive force between the first coating layer 130 and the cladding layer 112 of the quartz layer 110.

The second coating layer 140 includes the second coating layer matrix 141. In this embodiment, the base material of the second coating layer matrix 141 is set to be the same as the base material of the first coating layer 130, and the second coating layer matrix 141 may also be the acrylic polymer resin. Because the base material of the second coating layer matrix 141 is the same as that of the first coating layer 130, the adhesive force between the second coating layer matrix 141 and the first coating layer 130 is relatively strong.

The second coating layer 140 is provided on an outermost side of the reduced-diameter low-loss optical fiber, so that the second coating layer 140 also needs to have large tensile strength and compressive strength, so as to increase the tensile strength and the compressive strength of the reduced-diameter low-loss optical fiber 100.

In this embodiment, an elastic modulus of the second coating layer 140 is increased by providing the reinforcing members 142 in the second coating layer matrix 141.

Specifically, with continued reference to FIGS. 1 and 2, the reinforcing members 142 are evenly distributed in the second coating layer matrix 141, and the reinforcing members 142 can prevent the propagation of micro-cracks in the second coating layer matrix 141 and reduce the elongation at break of the second coating layer matrix 141, so as to increase the tensile strength and the compressive strength of the second coating layer 140, thereby further increasing the tensile strength and the compressive strength of the reduced-diameter low-loss optical fiber 100.

Therefore, in this embodiment, by setting the base material of the second coating layer matrix 141 and the base material of the first coating layer 130 to be the same, the adhesive force between the second coating layer 140 and the first coating layer 130 can be ensured. At the same time, by providing the plurality of reinforcing members 142 on the second coating layer matrix 141, the strength of the second coating layer 140 may be increased, so that the second coating layer 140 and the first coating layer 130 have a relatively strong adhesive force and the second coating layer 140 also has relatively large tensile strength and compressive strength.

In the reduced-diameter low-loss optical fiber 100 provided in the embodiments of the present application, the quartz layer 110, the adhesive layer 120, the first coating layer 130 and the second coating layer 140 are arranged in sequence from inside to outside along the radial direction R of the reduced-diameter low-loss optical fiber; the adhesive layer 120 is provided between the quartz layer 110 and the first coating layer 130 to increase the adhesive force between the first coating layer 130 and the quartz layer 110; the first coating layer 130 is configured to protect the quartz layer 110; the second coating layer 140 includes the second coating layer matrix 141 and the plurality of reinforcing members 142, where the base material of the second coating layer matrix 141 is the same as that of the first coating layer 130. By setting the base material of the second coating layer matrix 141 and the base material of the first coating layer 130 to be the same, the adhesive force between the second coating layer 140 and the first coating layer 130 can be ensured. The plurality of reinforcing members 142 are distributed in the second coating layer matrix 141, the reinforcing members 142 can prevent the propagation of micro-cracks in the second coating layer matrix 141 and reduce the elongation at break of the second coating layer matrix 141, so as to increase the tensile strength and the compressive strength of the second coating layer 140, thereby further increasing the tensile strength and the compressive strength of the reduced-diameter low-loss optical fiber 100.

Next, the specific structure of the adhesive layer 120 will be described.

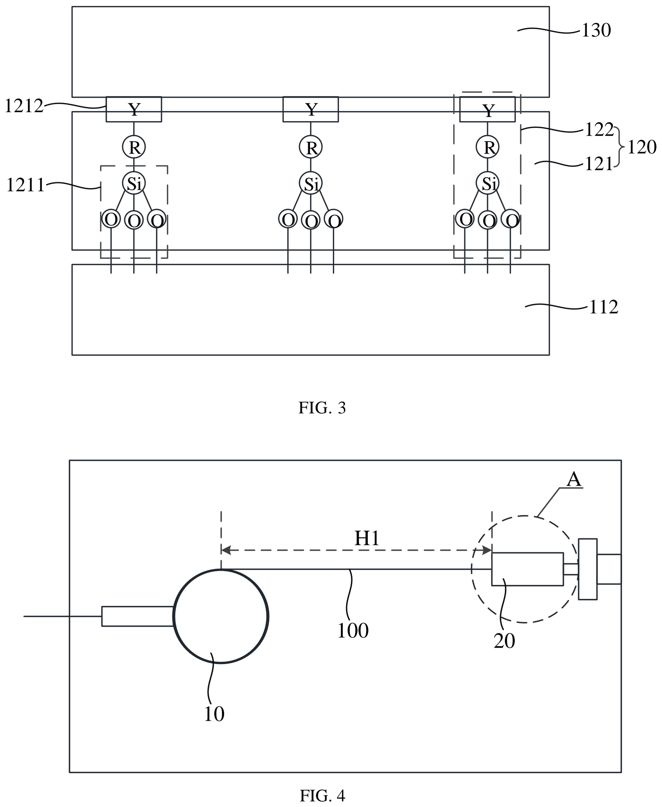

FIG. 3 is a schematic diagram of adhesive effect of the adhesive layer in a reduced-diameter low-loss optical fiber according to an embodiment of the present application.

Referring to FIG. 3, the adhesive layer 120 includes an adhesive layer matrix 121 and an adhesive agent 122, where the adhesive agent 122 is evenly distributed in the adhesive layer matrix 121. The adhesive agent 122 is a silane coupling agent which includes a first functional group 1211 and a second functional group 1212, where the first functional group 1211 is connected to the second functional group 1212 through a chemical bond, and the first functional group 1211 is one of a trimethoxy group or a triethoxy group; the second functional group 1212 is one of γ-methacryloxypropyl, γ-aminopropyl, 3-mercaptopropyl, or γ-mercaptopropyl; and the first functional group 1211 is bonded to the quartz layer 110 through the chemical bond, and the second functional group 1212 is bonded to the first coating layer 130 through the chemical bond.

The adhesive layer matrix 121 may also be an acrylic polymer resin, and the adhesive agent 122 is a silane coupling agent added to the acrylic polymer resin. The silane coupling agent may interact with both organic and the inorganic materials.

Specifically, the first functional group 1211 in the silane coupling agent may be one of trimethoxyl or triethoxyl. At an interface where the adhesive layer 120 is in contact with the cladding layer 112 in the quartz layer 110, the silicon in the first functional group 1211 is bonded to silicon elements in the cladding layer 112 through hydrogen bonds, resulting in a relatively strong adhesive force between the adhesive agent 122 and the cladding layer 112. The relatively strong adhesive force between the adhesive agent 122 and the cladding layer 112 may also slow the propagation of micro-cracks in the cladding layer 112.

The second functional group 1212 in the silane coupling agent may be one of γ-methacryloxypropyl, γ-aminopropyl, 3-mercaptopropyl, or γ-mercaptopropyl. At an interface where the adhesive layer 120 is in contact with the first coating layer 130, the second functional group 1212 forms a binging bond with the hydrogen bonds in the resin, so that the adhesive force between the adhesive agent 122 and the first coating layer 130 is relatively strong.

That is to say, the function of the silane coupling agent is to provide a molecular bridge between the interface of inorganic matter and the interface of organic matter, and to connect two materials with a relatively large difference in property more tightly together through the chemical bond, so that the adhesive force between the first coating layer 130 and the quartz layer 110 can be increased through the adhesive layer 120.

The silane coupling agent has a molecular formula of Y-R-Si(OR)3. In this embodiment, the silane coupling agent may be one or more of γ-methacryloxypropyltrimethoxysilane, γ-aminopropyltriethoxysilane, 3-mercaptopropyltriethoxysilane, and γ-mercaptopropyltrimethoxysilane.

When the content of the adhesive agent 122 in the adhesive layer 120 is too low, the adhesive force, which is increased by the adhesive agent 122, between the quartz layer 110 and the first coating layer 130 by is small. When the content of the adhesive agent 122 in the adhesive layer 120 is too high, it will affect the curing of the acrylic polymer resin serving as the adhesive layer matrix 121 in the adhesive layer 120. Therefore, in this embodiment, a mass percentage of the adhesive agent 122 in the adhesive layer 120 is 2%-5%.

When the optical cables are laid, it is generally necessary to weld the reduced-diameter low-loss optical fibers 100 in different optical cables. Before welding the reduced-diameter low-loss optical fiber 100, it is necessary to first peel off the first coating layer 130 and the second coating layer 140 at the end of the reduced-diameter low-loss optical fiber 100. Therefore, when the adhesive force between the first coating layer 130 and the cladding layer 112 in the quartz layer 110 is too strong, which will make it difficult for the first coating layer 130 and the second coating layer 140 to be peeled off from the quartz layer 110.

In this embodiment, the weight percentage of the adhesive agent 122 in the adhesive layer 120 is controlled within a range of 2%-5%, so that the adhesive force between the first coating layer 130 and the cladding layer 112 may be within a range of 10g-20g.

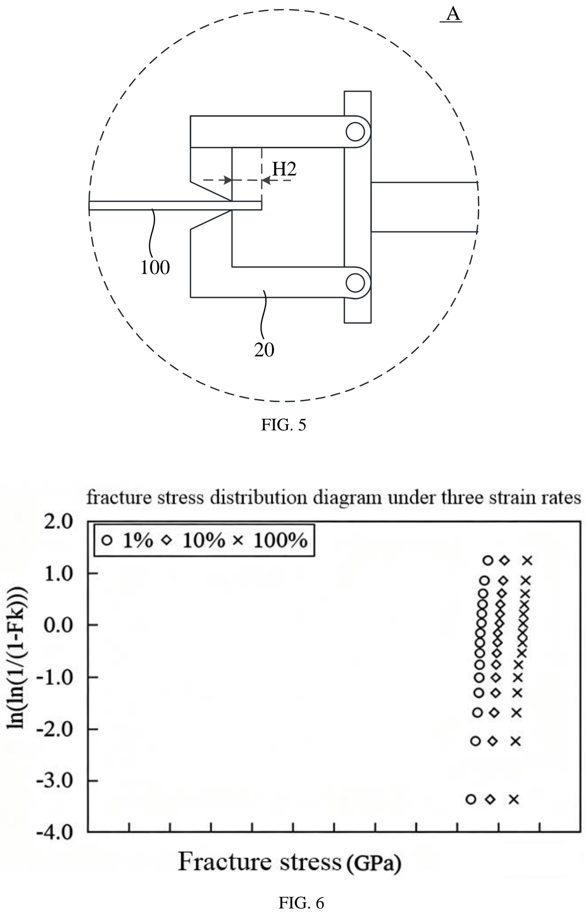

The adhesive force between the first coating layer 130 and the cladding layer 112 may be tested through a peel force test. FIG. 4 is a schematic diagram illustrating a peeling force testing process of a reduced-diameter low-loss optical fiber according to an embodiment of the present application; and FIG. 5 is an enlarged view of region A in FIG. 4.

Referring to FIGS. 4 and 5, the reduced-diameter low-loss optical fiber 100 is wound on a winding wheel 10, and the other end of the reduced-diameter low-loss optical fiber 100 is clamped in a peeling tool 20. A first length H1 between the winding wheel 10 and the peeling tool 20 is 500mm, and a second length H2 of the reduced-diameter low-loss optical fiber 100 clamped by the peeling tool 20 is generally 30-50mm. The winding wheel 10 is moved relative to the peeling tool 20 at a speed of 500mm/min, thereby peeling off the first coating layer 130 and the second coating layer 140 from the quartz layer 110. In the reduced-diameter low-loss optical fiber 100 provided in the embodiments of the present application, by controlling the weight percentage of the adhesive agent 122 in the adhesive layer 120, the measured peeling force is generally in a range of 1.5N-5N, and the peeling force of 1.5N-5N corresponds to the adhesive force of 10g-20g.

The specific structure of the second coating layer 140 will be described below.

With continued reference to FIG. 2, the reinforcing members 142 extend along the axial direction L of the reduced-diameter low-loss optical fiber, and are nanotubes. The nanotubes may be one or more of carbon nanotubes, boron nitride nanotubes, silicon nanotubes and titanium dioxide nanotubes. The nanotubes extend in the second coating layer matrix 141 along the axial direction L of the reduced-diameter low-loss optical fiber. The nanotubes have the characteristics of light weight, good flexibility and high tensile strength. Therefore, by adding the nanotubes in the second coating layer matrix 141, the propagation of micro-cracks in the second coating layer 140 can be prevented, so as to increase the elastic modulus of the second coating layer 140 along the axial direction L of the reduced-diameter low-loss optical fiber, and reduce the elongation at break of the second coating layer 140 along the axial direction L of the reduced-diameter low-loss optical fiber. As a result, the tensile strength and the compressive strength of the second coating layer 140 along the axial direction L of the reduced-diameter low-loss optical fiber can be increased.

Each nanotube has a hollow structure, and has better flexibility and strain along the radial direction R of the reduced-diameter low-loss optical fiber, so as to increase the bending resistance and pressure resistance capability of the reduced-diameter low-loss optical fiber 100 along its radial direction R.

In this embodiment, a size of the nanotube along the radial direction R of the reduced-diameter low-loss optical fiber may be less than 100nm, and a ratio of the size of the nanotube along the axial direction L of the reduced-diameter low-loss optical fiber to the size of the nanotube along the radial direction R of the reduced-diameter low-loss optical fiber is greater than 100:1.

In this embodiment, the second coating layer 140 further includes a dispersing agent, and the dispersing agent is configured to evenly distribute the nanotubes in the second coating layer matrix 141.

Specifically, the acrylic polymer resin is coated in a liquid state, and the dispersing agent and the nanotubes are added to the liquid acrylic polymer resin. One end of the dispersing agent is a group with affinity for the nanotubes and the other end thereof is a hydrophobic group, and the dispersing agent can enable the nanotubes to be uniformly distributed in the second coating layer matrix 141. When the acrylic polymer resin added with the dispersing agent and nanotubes is coated, the dispersing agent may cause the nanotubes to extend along the axial direction L of the reduced-diameter low-loss optical fiber as the acrylic polymer resin flows along the axial direction L of the reduced-diameter low-loss optical fiber. After the acrylic polymer resin is cured to form the second coating layer matrix 141, the nanotubes may be arranged in the second coating layer matrix 141 along the axial direction L of the reduced-diameter low-loss optical fiber.

The dispersing agent may be one or more of carbon nanotube resin dispersing agent, hexadecyltrimethylammonium bromide and anthracenyl octadecyl stearoyl chloride. Depending on the pipe size and the stacked-layer number of the nanotube, different amounts of dispersing agent can be selected, with the amount of dispersing agent being 0.3-2.5 times the mass of the nanotubes.

When the proportion of the nanotubes in the second coating layer 140 is relatively small, the strength of the second coating layer 140 increased by the nanotubes is limited; and when the proportion of the nanotubes in the second coating layer 140 is relatively large, the strength of the second coating layer 140 is too large, resulting in high attenuation and loss of the reduced-diameter low-loss optical fiber 100 when being bent.

Therefore, in this embodiment, a mass percentage of the nanotubes in the second coating layer 140 is 0.25%-5%.

By controlling the mass percentage of the nanotubes in the second coating layer 140, the elastic modulus of the second coating layer 140 along the axial direction L of the reduced-diameter low-loss optical fiber is greater than 800MPa and less than or equal to 2000MPa.

When the elastic modulus of the second coating layer 140 along the axial direction L of the reduced-diameter low-loss optical fiber is less than 800Mps, the overall tensile strength of the reduced-diameter low-loss optical fiber 100 is relatively small, making it difficult to meet the use requirements of the reduced-diameter low-loss optical fiber 100. When the elastic modulus of the second coating layer 140 along the axial direction L of the reduced-diameter low-loss optical fiber is greater than 2000Mps, the overall strength of the reduced-diameter low-loss optical fiber 100 is too large, resulting in high optical attenuation of the reduced-diameter low-loss optical fiber 100.

FIG 6 is a fracture stress distribution diagram of a reduced-diameter low-loss optical fiber under three strain rates according to an embodiment of the present application.

Referring to FIG. 6, the to-be-tested sample of the reduced-diameter low-loss optical fiber 100 has a length of 500mm, and a ratio of three numerical values of 1%, 10% and 100% of the to-be-tested sample length to time is selected as a strain rate, where the three strain rates are 5mm/s, 50mm/s and 500mm/s, respectively. The horizontal coordinate in FIG. 3 shows the fracture stress after performing fifteen tests at each strain rate. It can be seen from FIG. 3 that, when the test is performed at different strain rates, the fracture stresses of the reduced-diameter low-loss optical fiber 100 at different strain rates are all greater than 5.0GPa, and the tensile strength of the reduced-diameter low-loss optical fiber 100 is relatively large.

The thickness of each coating layer of the reduced-diameter low-loss optical fiber 100 provided in the embodiments of the present application will be described below.

Specifically, the adhesive layer 120 is provided at an interface between the first coating layer 130 and the cladding layer 112, and the thickness of the adhesive layer 120 only needs to satisfy a space required by the adhesive agent 122, without requiring the adhesive layer 120 to be excessively thick. Therefore, in this embodiment, the thickness of the adhesive layer 120 is 5µm-10µm.

The first coating layer 130 is configured to protect the quartz layer 110. In this embodiment, the thickness of the first coating layer 130 is 12.5µm-32.0µm. The nanotubes are required to be added into the second coating layer 140, and the thickness of the second coating layer 140 may be slightly greater than that of the first coating layer 130; and in this embodiment, the thickness of the second coating layer 140 is 15-30µm.

The reduced-diameter low-loss optical fiber 100 includes a single-mode optical fiber and a multi-mode optical fiber, and the fiber cores 111 of the single-mode optical fiber and the multi-mode optical fiber have different diameters. The diameter of the fiber core 111 of the single-mode optical fiber is in a range of 8.0µm-12µm, the diameter of the cladding layer 112 is in a range of 124µm-126µm, the total diameter of the cladding layer 112, the adhesive layer 120 and the first coating layer 130 is in a range of 150µm-200µm, and the total diameter of the cladding layer 112, the adhesive layer 120, the first coating layer 130, and the second coating layer is in a range of 180µm-255µm, where the thickness of the adhesive layer 120 is in the range of 5µm-10µm, and the diameter of the single-mode optical fiber is made smaller by providing the adhesive layer 120.

An attenuation factor of the single-mode optical fiber at a wavelength of 1550nm is less than 0.184dB/km. The single-mode optical fiber has a low bending loss, for example, the additional loss is less than 0.05dB when the optical fiber is bent at a bend radius of 30mm for one hundred turns.

The diameter of the fiber core 111 of the multi-mode optical fiber is in a range of 47.5µm-52.5µm, the diameter of the cladding layer 112 is in a range of 124µm-126µm, the total diameter of the cladding layer 112, the adhesive layer 120 and the first coating layer 130 is in a range of 150µm-200µm, and the total diameter of the cladding layer 112, the adhesive layer 120, the first coating layer 130 and the second coating layer 140 is in a range of 180µm-255µm after adding, where the thickness of the adhesive layer 120 is in a range of 5µm-10µm, and the diameter of the single-mode optical fiber is made smaller by providing the adhesive layer 120.

An attenuation coefficient of the multi-mode optical fiber at a wavelength of 1300nm is less than 1.0dB/km.

Table 1 lists various parameters for the single-mode optical fiber and the multi-mode optical fiber.

**Table 1 Various parameter tables for single-mode optical fiber and multi-mode optical fiber**

| Index | Single-mode optical fiber | Multi-mode optical fiber |
|---|---|---|
| Thickness of the adhesive layer 120 (µm) | 5 | 6.5 |
| Mass percentage (%) of the adhesive agent 122 in the adhesive layer (%) | 2.5 | 4 |
| Thickness of the first coating layer 130 (µm) | 15 | 20 |
| Thickness of the second coating layer 140 (µm) | 15 | 17.5 |
| Elongation at break (%) of the second coating layer 140 along the axial direction L of the reduced-diameter low-loss optical fiber (%) | 5 | 6.2 |
| Elastic modulus of the second coating layer 140 along the axial direction L of the reduced-diameter low-loss optical fiber (MPa) | 1500 | 1200 |
| Mass percentage of the nanotubes in the second coating layer 140 (%) | 0.5 | 1 |
| Mean peeling force of coating layer (N) | 2.1 | 2.3 |
| Tensile fracture stress of the reduced-diameter low-loss optical fiber 100 (GPa) | 5.5 | 5.3 |
| Attenuation coefficient (dB/km) | 0.168@1550nm | 0.54@1300nm |

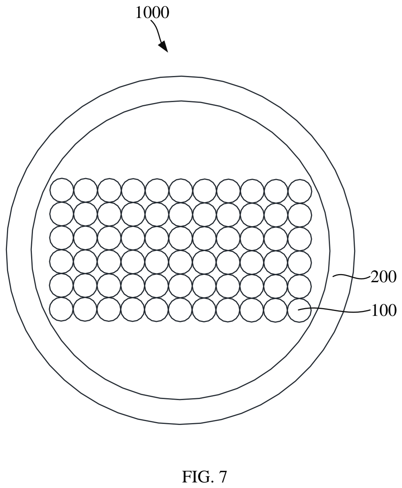

FIG. 7 is a schematic structural diagram of an optical cable according to an embodiment of the present application.

Referring to FIG. 7, the embodiments of the present application further provide an optical cable 1000, including a protective layer 200 and a plurality of reduced-diameter low-loss optical fibers 100 according to the above-mentioned embodiments, where the plurality of reduced-diameter low-loss optical fibers 100 are arranged inside the protective layer 200.

The specific structure of the reduced-diameter low-loss optical fiber 100 has been described in detail in the above-mentioned embodiments, and will not be repeated herein. The protective layer 200 is configured to protect the reduced-diameter low-loss optical fibers 100.

Finally, it should be noted that the above-mentioned embodiments are merely intended for describing the technical solutions of the present application rather than limiting the present application. Although the present application has been described in detail with reference to the above-mentioned embodiments, those ordinary skilled in the art should understand that they may still make modifications to the technical solutions described in the above-mentioned embodiments, or make equivalent replacements to some or all technical features thereof; and these modifications or replacements do not make the essence of the corresponding technical solutions depart from the scope of the technical solutions in the various embodiments of the present application.

## Claims

1. A reduced-diameter low-loss optical fiber, comprising a quartz layer, an adhesive layer, a first coating layer, and a second coating layer which are sequentially provided from inside to outside along a radial direction of the reduced-diameter low-loss optical fiber; wherein
the adhesive layer is configured to increase an adhesive force between the first coating layer and the quartz layer; the first coating layer is configured to protect the quartz layer; and the second coating layer comprises a second coating layer matrix and a plurality of reinforcing members, a base material of the second coating layer matrix is the same as that of the first coating layer, and the plurality of reinforcing members are distributed in the second coating layer matrix, so as to increase a strength of the reduced-diameter low-loss optical fiber.

2. The reduced-diameter low-loss optical fiber according to claim 1, wherein the adhesive layer comprises an adhesive layer matrix and an adhesive agent, the adhesive agent is uniformly distributed in the adhesive layer matrix and the adhesive agent is a silane coupling agent which comprises a first functional group and a second functional group; the first functional group is connected to the second functional group through a chemical bond; the first functional group is one of trimethoxy or triethoxy; and the second functional group is one of γ-methacryloxypropyl, γ-aminopropyl, 3-mercaptopropyl, or γ-mercaptopropyl; and
the first functional group is bonded to the quartz layer through the chemical bond, and the second functional group is bonded to the first coating layer through the chemical bond.

3. The reduced-diameter low-loss optical fiber according to claim 2, wherein a mass percentage of the adhesive agent in the adhesive layer is 2% -5%.

4. The reduced-diameter low-loss optical fiber according to claim 3, wherein the adhesive force between the first coating layer and the quartz layer is in a range of 10g-20g.

5. The reduced-diameter low-loss optical fiber according to any one of claims 1-4, wherein the reinforcing members extend along an axial direction of the reduced-diameter low-loss optical fiber, and the reinforcing members are nanotubes.

6. The reduced-diameter low-loss optical fiber according to claim 5, wherein the second coating layer further comprises a dispersing agent, and the dispersing agent is configured to uniformly distribute the nanotubes in the second coating layer matrix.

7. The reduced-diameter low-loss optical fiber according to claim 6, wherein a mass percentage of the nanotubes in the second coating layer is 0.25%-5%.

8. The reduced-diameter low-loss optical fiber according to claim 7, wherein an elastic modulus of the second coating layer along the axial direction of the reduced-diameter low-loss optical fiber is greater than 800Mpa and less than or equal to 2000Mpa.

9. The reduced-diameter low-loss optical fiber according to any one of claims 1-4, wherein a thickness of the adhesive layer is 5-10µm; a thickness of the first coating layer is 12.5-32.0µm; and a thickness of the second coating layer is 15-30µm.

10. An optical cable, comprising a protective layer and a plurality of reduced-diameter low-loss optical fibers according to any one of claims 1-9, wherein the plurality of reduced-diameter low-loss optical fibers are arranged inside the protective layer.
